**Europäisches Patentamt**

**European Patent Office**

**Office européen des brevets**

(19)

(11) Publication number : **0 365 227 B1**

# EUROPEAN PATENT SPECIFICATION

(12)

(45) Date of publication of patent specification :
**27.05.92 Bulletin 92/22**

(51) Int. Cl.⁵ : **F16B 19/05**

(21) Application number : **89310513.0**

(22) Date of filing : **13.10.89**

(54) **Swageable tubular member.**

(30) Priority : **20.10.88 GB 8824586**

(43) Date of publication of application :
**25.04.90 Bulletin 90/17**

(45) Publication of the grant of the patent :
**27.05.92 Bulletin 92/22**

(84) Designated Contracting States :
**AT DE ES FR GB IT**

(56) References cited :
**GB-A- 2 083 586**
**GB-A- 2 138 913**
**GB-A- 2 160 944**

(73) Proprietor : **AVDEL SYSTEMS LIMITED**
**Mundells**
**Welwyn Garden City Hertfordshire AL7 1EZ**
**(GB)**

(72) Inventor : **Lacey, Raymond Dennis**
**"The Bee House" Hanbury Lane**
**Essendon Hertfordshire (GB)**
Inventor : **McGauran, Hugh Kieran**
**50 Hawkenbury**
**Harlow Essex (GB)**
Inventor : **Hancock, David James**
**15 Templewood**
**Welwyn Garden City Hertfordshire (GB)**

(74) Representative : **Treacher, Alan Leslie**
**P.O. Box 154**
**Welwyn Garden City Hertfordshire AL7 1LW**
**(GB)**

EP 0 365 227 B1

## Description

The invention relates to a pin and swageable tubular member fastener according to the preamble of claim 1. Such fasteners are commonly used for securing together two or more workpieces, such as metal panels, having aligned holes through which the fastener is inserted.

There are two varieties of such fasteners. In the first variety, the pin has a radially enlarged head at one end, which head abuts one outside face of the workpieces, the pin shank extends through the holes and protrudes from the other outside face of the workpieces, and the tubular member is swaged on to the protruding part of the pin to abut that other face of the workpieces and lock the tubular member to the pin. Such fasteners are commonly known as lockbolts, and access to both sides of the workpieces is necessary to install the fastener.

The second variety of fastener requires access to only one side of the workpieces, and is therefore known as a blind fastener. In this variety of fastener the tubular member has an enlarged head at one end which head abuts the nearer outside face of the workpieces, with the tubular member extending through the aligned holes and protruding beyond the remote or blind outside face of the workpieces. The pin extends inside the tubular member and engages it at or near the end of the tubular member remote from the head thereof. Commonly (but not necessarily) the pin has an enlarged head which engages the tubular member. Such head is usually of a diameter no greater than that of the tubular member to facilitate the insertion through the aligned holes, and the filling thereof, by the tubular member. Instead of the pin having an enlarged head, the tubular member may be crimped into a groove in the pin. In both cases, the pin is pulled to cause the remote end of the tubular member to enlarge radially and to form a blind head which abuts the remote or blind face of the workpieces. The head end of the tubular member is then swaged on the pin, to lock the tubular member to the pin.

The present invention was developed primarily for application to the first variety of fastener, i.e. to lockbolts, and will herein after be described in detail in relation to lockbolts. However, it is equally applicable to blind fasteners of the second variety described above.

In order that the tubular member can be swaged to the pin, the pin is provided with a number of annular grooves (the locking grooves) into one or more of which the tubular member can be swaged by means of an annular anvil which engages the exterior of the tubular member, to lock the tubular member to the pin. Commonly an installation tool is employed in which the tail end of the pin extends through the annular anvil where it can be gripped by a gripping device (such as a set of jaws) incorporated in the tool, which also includes pulling means for pulling the gripping means against a reaction taken up through the anvil on to the tubular member.

In order that the gripping means can grip the pintail, the pintail is usually provided with a number of annular grooves (the pulling grooves) with which the gripping means can engage to pull the pin.

Since it is a practical requirement that, after completion of the swaging operation, the pin breaks at a position substantially level with the outside end of the swaged tubular member (the so called "flush break" condition), the pin has commonly been provided with a breakneck, defined by an annular breakneck groove around it, and positioned, along the length of the pin, intermediate the locking grooves and the gripping grooves. The breakneck must be the weakest part of the pin, so that the breakneck groove must be deeper than any of the locking grooves and gripping grooves. However, the provision of a single breakneck groove which must be aligned substantially level with the outer end of the swaged member (i.e. the end remote from the workpieces), in order to achieve a flush break, places severe limitations on the range of total thicknesses of workpieces (known as the "grip range") which identical fasteners of the same design can satisfactorily join. A grip range which is as large as possible is a very valuable practical advantage for such fasteners. An improved form of fastener is provided with what is known as "multigrip" pin. In such a pin, the single breakneck groove is replaced by a number of combination grooves, each of which is capable of acting as either a locking groove or a breakneck groove, and which are arranged so that the pin will break at that one of those grooves which is substantially level with the outer end of the swaged tubular member. This provides a range of possible positions for the tubular member when it is swaged to the pin, and thus an enhanced grip range. However, it is found that, after the pin tail has broken off, the surface left on the broken end of the locked portion of the pin may be uneven, with part of the rough, broken, surface projecting outwardly from the end of the installed pin, beyond the end of the fully swaged collar. This could present a hazard.

The present invention provides:-

a pin and swageable tubular member fastener of the type in which the pin carries a plurality of combination lock and break grooves, each of which combination grooves is capable of acting either as a locking groove or as a breakneck groove, and the tubular member is swageable into one or more of the combination grooves to lock the tubular member to the pin; which tubular member has a first portion of its length of an internal diameter suitable for swaging into one or more of the combination grooves on the pin, and a second portion of its length, located at that end of the tubular member which in use will be the outer end of the tubular member, which second portion has an increased internal diameter which is such that when the tubular member is swaged onto the pin the second portion will not engage with the pin, the junction of the first and second portions of the tubular member meeting the internal diameter of the first portion of the tubular member by an annular shoulder face which is substantially at right-angles to the axis of the tubular member, characterised in that in the pin the plurality of combination lock and break grooves are all of identical root diameter and therefore of identical breakneck strength, and in that in the tubular member the second portion is of constant wall thickness over the major part of its length adjacent the shoulder.

The outer end of the tubular member is the end which is remote from the workpieces, and is the end which is first acted on by the swaging tool.

Preferably the angle between the annular shoulder face and the axis of the pin is greater than 75 degrees.

Preferably the internal diameter of the second portion is substantially uniform.

Preferably the internal diameter of the second portion is such that the wall thickness of the second portion is substantially one half of the wall thickness of the first portion.

Preferably the axial extent of the second portion is substantially equal to one half of the thickness of the first portion.

Preferably the axial extent of the second portion of the tubular member not less then one half of the pitch of the combination grooves on the pin.

Preferably the axial extent of the second portion of the tubular member is not more than the pitch of the combination grooves on the pin.

A specific embodiment of the invention, and a modification thereof, will now be described by way of example and with reference to the accompanying drawings, in which:-

Figure 1 is an axial longitudinal section, on an enlarged scale, through a lockbolt collar according to the invention;

Figure 2 is an axial longitudinal sectional view through a lockbolt incorporating the collar of Figure 1, inserted through aligned holes in workpieces to be joined, and having an installation tool in initial engagement with the fastener;

Figures 3, 4 and 5 are a sequence of views, similar to Figure 2, illustrating the installation sequence from initial swaging to completion of swaging and pin break; and

Figure 6 is a view corresponding to Figure 5 but illustrating the application of the invention to different variety of fastener.

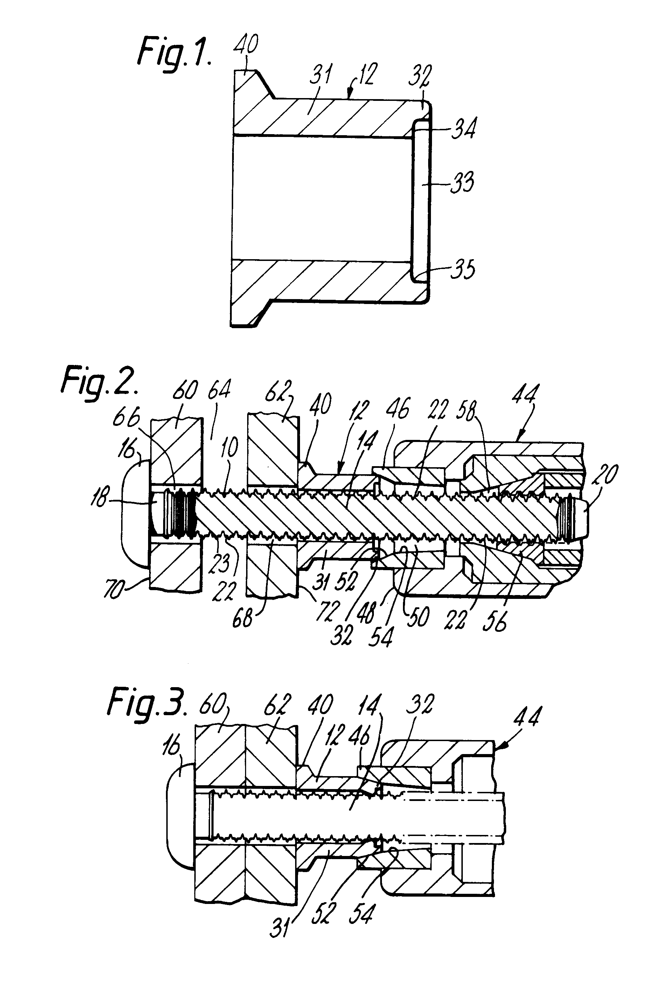

In the example illustrated in Figures 1 to 5, the fastener is of the first variety referred to above, commonly known as a lockbolt. The fastener comprises a pin 10 together with a separate tubular member in the form of a collar 12, both made of steel. The pin 10 comprises an elongated shank 14, having a radially enlarged head 16 formed integrally therewith at one end. Apart from a short cylindrical section 18 immediately adjacent the head, and a short bevel or taper 20 at the remote free end of the shank (i.e. the tail end of the shank), the remainder of the length of the shank is formed with a plurality of substantially identical, annular combination locking, breakneck and pulling grooves 22. These identical combination grooves thus extend over nearly all of the length of the pin shank. Each adjacent pair of grooves defines an annular rub 23 between them.

The fastener also comprises the previously mentioned collar 12. This is generally tubular and cylindrical in form, having a first portion 31 of uniform internal diameter which is a sliding fit over the crests of the ribs 23, suitable for swaging into the grooves on the pin. The collar has an outwardly extending flange 40 at one end, to abut one of the workpiece faces. The axial length of the first portion 31 is sufficient to cover a number of adjacent grooves on the pin, in this example about six or seven grooves.

The collar of this example also has a second portion 32, continuous and integral with the first portion 31, at the end of the collar remote from the flange 40. The second portion 32 has the same external diameter as the first portion 31, but has an increased internal diameter, provided by a counterbore 33 in the end of the collar. The junction of the different internal diameters of the portions 31 and 32 meets the internal diameter of the first portion 31 by an annular shoulder face 34 which is substantially at right angles to the axis of the collar. At its radially outer edge the annular face 34 blends into the internal diameter of the second portion 32 by a radius 35. As illustrated in the Figure 1, the relationship between the common external diameter, and the different internal diameters, of the first portion 31 and second portion 32, is such that the wall thickness of the second portion is about half that of the first portion 31. The axial extent of the second portion 32 is about equal to its thickness, and is also about equal to one half of the length of the pitch of the grooves on the pin.

The pulling tool 44 used is of the usual type employed for placing lockbolts. It has an annular swaging anvil 46 extending forwardly from the nose portion 48 of the tool. The anvil 46 has a central frusto-conically shaped opening or throat 50, which opening has a first relatively steeply tapered portion 52 at its outer end, and a second less steeply tapered part 54 behind the part 52. The outer tapered part 52 is such that the external diameter of the cylindrical part (i.e. the first and second portion) of the collar 21 will just enter its wider end. The tool also comprises gripping and pulling means, provided by jaws 56 which are carried in a collet 58. The jaws have teeth of the appropriate form to engage in the radially outer parts of the combination grooves 22 on the lockbolt pin. Actuation of the pulling tool will cause the jaws 56 to engage the grooves of a pin inserted between them, and to retract the pin rearwardly with respect to the anvil so as to exert a pulling or tension force on the pin.

The method of use of the fastener will now be described, with reference to Figures 2, 3, 4 and 5 of the drawings.

The lockbolt is installed in a workpiece comprising two metal panels 60, 62 which it is used to secure together. The panels may initially have a gap 64 between them. Aligned holes 66, 68 are provided in the two panels, the holes being circular in cross-section and of a diameter which is a clearance fit on the pin shank 14 but is smaller than the diameter of the pin head 16 and the collar flange 40. The pin 14 is inserted from the back of the panels (i.e. the left-hand side as viewed in Figure 1) until the pin head 16 abuts the adjacent back face 70 of the back panel 60, and the free end of the pin shank 14 protrudes from the front or near face 72 of the other panel 62. The collar 12 is placed over the pin shank, with the flange 40 nearer the panels 60, 62, and the second portion 32 of reduced wall thickness remote from the panels. The collar 12 is pushed along the pin until the collar flange 40 abuts the front panel face 72. The pulling tool 44 is offered up to the protruding pin shank so that the pin shank enters the anvil throat 50 and enters between the jaws 56. The tool is pushed forward until the anvil outer taper 52 contacts the second portion 32 of the collar, at the outer end of the collar 12. The pulling tool 44 is then actuated so that initially the jaws 56 close together and grip the pin, with the jaw teeth entering the radially outer parts of those of the combination grooves 22 on the pin which lie between the teeth. This is the position illustrated in Figure 1.

Continued actuation of the tool causes the jaws to be retracted with respect to the anvil. Since the jaws are engaged in the pin grooves and the pin cannot move because of the engagement of its head 16 with the panel face 70, the anvil 46 is driven forwards, i.e. towards the left as shown in Figures 2, 3, 4 and 5. This pushes the front sheet 62 backwards, closing the gap 64, until the two sheets 60, 62 abut each other.

The tapered part 52 of the anvil throat then starts to be driven over the collar 12. This deforms the collar radially inwardly, starting with the second portion 32 of the collar. The increased internal diameter of the second portion 32 ensures that even when fully swaged radially inwardly by the narrow end of the tapered anvil 54, the second portion 32 of the collar does not engage with the ribs 23 on the pin. However, the fact that the secon portion 32 of the collar is integral with the first portion 31 means that the inward swaging force, applied to the second portion 32 by the progressively tapering anvil faces 52 and 54, also affects the adjacent outermost end of the first portion 31 of the collar. This will be referred to later.

The progressive advance of the tapered anvil 52 and 54 along the collar starts to swage the outer end of the first portion 31 of the collar into at least the radially outer parts of those of the combination grooves 22 which lie inside it. Figure 3 illustrates an early stage in this progress, where the end part of the first portion 31 of the collar 12 is being swaged into the first groove inside the end of that portion of the collar.

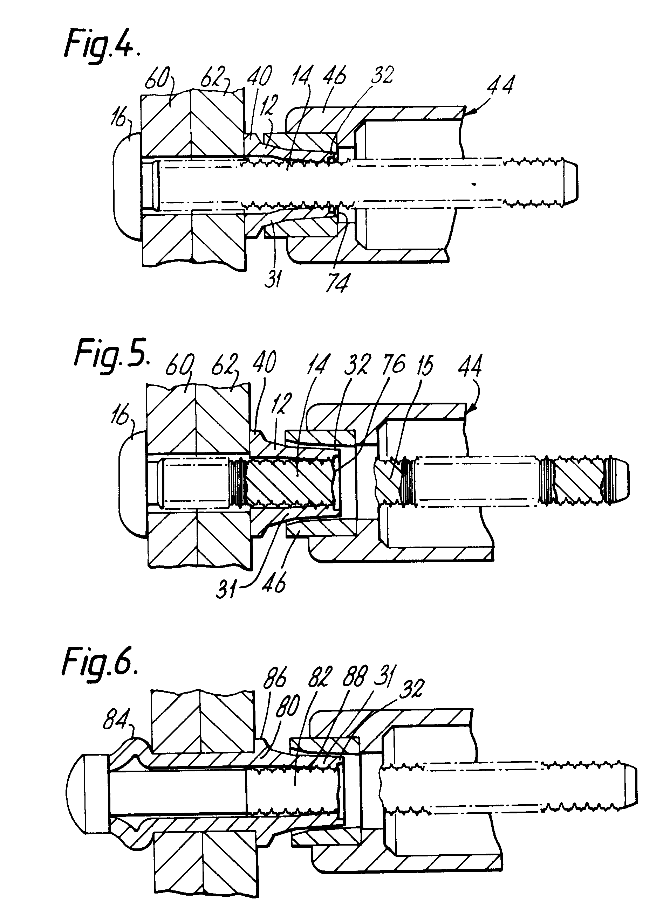

Further continued actuation of the placing tool causing the anvil 46 to be driven further over the collar, thereby swaging more of the length of the first part 31 of the collar 12 into the radially outer part of successive combination grooves 22 on the pin. Figure 4 illustrates the position where swaging is complete, and the collar cannot be deformed any further.

The collar has been swaged into the combination grooves to an extent which is not the same for all the grooves, but progressively decreases towards the collar flange 40 i.e. away from the annular shoulder face 34. The forward movement of the anvil 46 with its tapered throat 50, progressively along the collar 12, has caused the collar to elongate slightly. Since the rear end of the first portion 31 of the collar is locked into the grooves on the pin, this elongation has the effect of pressing the collar flange 40 forwards, so that the sheets 60 and 62 are squeezed between the pin head 16 and collar flange 40 when the collar is fully swaged with tension remaining in the pin. Additionally, it is possible for the collar to elongate slightly at its tail or free end. Since the collar cannot be deformed any more, increased tension on the pin, resulting from continued actuation of the pulling tool, causes the pin to break. It is found that this break occurs at that combination groove 22 on the pin which is at or adjacent the annular face 34 at the end of the first portion 31 of the collar. Since all the combination grooves have the same maximum depth, i.e. the diameter of each breakneck is the same, all breaknecks should have the same strength. Breaking is believed to occur at that groove which has the maximum additional tension applied across it by virtue of material from the swaged collar wedging apart the two ribs which lie on each side of the groove. This additional tension will be greatest at the tail-most groove at which the swaged collar material substantially fully enters the outermost groove part to provide such a wedging effect. Considering two adjacent grooves 22 into which the collar is swaged to a similar or substantially similar extent, the resultant axial force on that rib which is between the grooves will be very low due to the two wedging forces being substantially similar. However, adjacent the outer end of the fully swaged collar, there will be one annular rib on which the axial force is substantially unbalanced. The resultant axial force will be in the direction towards the tail end of the pin, due to the absence, or relatively small extent, of collar material swaged into the groove on the tailward side of the rib, compared with that swaged into the groove on the other side of the rib i.e. on the side towards the pin head. Consequently, it is believed, the additional axial tension is greatest across that groove which is on the side of the aforesaid rib towards the head, and the pin breaks at that breakneck.

Figure 5 illustrates the position immediately after breaking, with the tailmost part 15 of the pin separated from the remainder, and the anvil 46 freed from the fully swaged collar. The pin has broken at the groove level with the annular face 34 of the swaged collar, leaving a broken surface 76.

One advantage of the fastener incorporating the collar according to this invention is that the second portion 32 of the collar projects axially beyond the broken surface 76 of the pin, thus offering mechanical protection, around the surface 76. In other words, the broken surface 76 does not project outwardly beyond the end of the collar, thus removing or substantially decreasing the hazard of a projecting rough surface previously mentioned.

However, there is a further and unexpected advantage given by the collar described in the foregoing example. It is found that, with installed fasteners incorporating the improved collar, the broken surface 76 on the end of the pin tends to be less rough and less uneven than with fasteners using prior art collars, which do not have the end portion 32 of reduced internal diameter. In other words, these prior art collars have their outer end faces flat and annular and extending from the internal diameter to the external diameter of the cylindrical body of the collar.

It is believed that the improved resulting broken face on pins used with the improved collars is due to the alteration of stress concentration at the annular shoulder face 34 of the collar. As previously mentioned, when the collar is swaged by the tool anvil, the inward swaging force on the second portion 32 of the collar also affects the force on the adjacent part of the first portion 31 of the collar. Since the annular face 34 is at the junction of the two portions 31 and 32, the inward swaging forces on both of the collar portions 31 and 32 affect the annular face 34 of the collar. It appears that the additional force applied to that part of the first portion 31 of the collar which is adjacent the annular face 34, due to the swaging force applied to the adjacent second portion 32 of the collar, tends to alter the stress concentration in both the collar and pin, and to improve the resulting broken surface 76 on the pin. This is found to happen regardless of the precise axial location of the annular shoulder face 34 of the collar in relation to the profile of any particular groove or any particular rib on the pin. Thus, the annular shoulder face 34 on the collar may be aligned with the deepest part of a groove, or with the crest of a rib, or with any intermediate position.

It must be emphasized that the improved swageable tubular member of this invention is designed specifically to try to overcome problems encountered in the breaking of multigrip pins which have combination lock and break grooves, any one of which grooves must be able to act as a breaker groove, regardless of the precise axial relationship of the collar and pin groove profile, as described above. Such problems do not arise in the case of conventional pins in which only one breaker groove is provided, at which the pin must break. We are aware that it has been proposed to provide a swageable collar for such a pin in which the outer end of the internal bore of the collar is of a reduced internal diameter which varies continuously, by having an internal taper at about 45 degrees to the axis of the bore. Such a collar, if used with a pin having combination lock and break grooves, would not provide the beneficial results provided by the collar of the present invention.

We are also aware that GB 2 083 586A discloses, in Figure 7 and page 3 lines 86 to 114, a somewhat similar fastener, the pin of which relies on grooves of progressively decreasing root diameter in order to ensure that the break occurs at the correct groove, and in which the second portion of the tubular member has its exterior tapered over most of its length, so that its external diameter, and also its wall thickness, progressively reduces over the greater part of its length.

Figure 6 illustrates an alternative embodiment of the invention, when fully installed, in the form of a blind fastener of the second variety previously mentioned. Here the tubular member is provided by the shell 80 of a blind rivet, the pin 82 being pulled into the shell to deform the shell to form a blind head 84. The outer end of the shell has a preformed head 86, part of which is swaged into grooves 88 on the pin in order to lock the pin to the shell.

The invention is not restricted to the details of the foregoing examples. For instance, the pin and collar need not be of steel but could be of any other suitable material, e.g. aluminium alloy.

In particular, although in the foregoing examples the annular shoulder face 34 at the end of the first portion 31 of the fastener has been illustrated as at right angles to the axis of the pin, this need not necessarily be so. Instead of the angle between the face 34 and the axis being 90 degrees, it might be reduced to as low as 75 degrees, preferably sloping outwardly and back away from the flanged end of the collar. The term "substantially at right angles" in the claims is to be interpreted to include such an angle. Such a configuration of collar may be easier to manufacture, and will still give the benefits of the example described above.

The axial length of the second portion 32 of the collar may be greater than one half of the pin groove pitch.

## Claims

1. A pin and swageable tubular member fastener of the type in which the pin carries a plurality of combination lock and break grooves, each of which combination grooves is capable of acting either as a locking groove or as a breakneck groove, and the tubular member is swageable into one or more of the combination grooves to lock the tubular member to the pin; which tubular member has a first portion of its length of an internal diameter suitable for swaging into one or more of the combination grooves on the pin, and a second portion of its length, located at that end of the tubular member which in use will be the outer end of the tubular member, which second portion has an increased internal diameter which is such that when the tubular member is swaged onto the pin the second portion will not engage with the pin, the junction of the first and second portions of the tubular member meeting the internal diameter of the first portion of the tubular member by an annular shoulder face which is substantially at right-angles to the axis of the tubular member, characterised in that in the pin the plurality of combination lock and break grooves (22) are all of identical root diameter and therefore of identical breakneck strength, and in that in the tubular member the second portion (32) is of constant wall thickness over the major part of its length adjacent the shoulder (34).

2. A fastener as claimed in claim 1, characterised in that the angle between the annular shoulder face (34) and the axis of the pin is greater than 75 degrees.

3. A fastener as claimed in any of the preceding claims, characterised in that the internal diameter of the second portion (32) is substantially uniform.

4. A fastener as claimed in any of the preceding claims, characterised in that the internal diameter of the second portion (32) is such that the wall thickness of the second portion is substantially one half of the wall thickness of the first portion (31).

5. A fastener as claimed in any of the preceding claims, characterised in that the axial extent of the second portion (32) is substantially equal to one half of the wall thickness of the first portion (31).

6. A fastener as claimed in any of the preceding claims, characterised in that the axial extent of the second portion (32) of the tubular member (12, 80) is not less than one half of the pitch of the combination one half of the pitch of the combination grooves (22) on the pin (10).

7. A fastener as claimed in any of the preceding claims, in which the axial extent of the second portion (32) of the tubular (12, 80) member is not more than the pitch of the combination grooves (22) on the pin (10).

## Patentansprüche

1. Befestigungselement aus einem Stift und einem gesenkschmiedbaren röhrenförmigen Element der Art, bei der der Stift eine Mehrzahl Kombinationssicherungs- und Bruchrillen aufweist, die jeweils entweder als Sicherungs- oder als Bruchrille wirken können und bei der das röhrenförmige Element in eine oder mehrere der Kombinationsrillen gesenkgeschmiedet werden kann, um das röhrenförmige Element an dem Stift zu befestigen, wobei ein erster Teil der Länge des röhrenförmigen Elements einen Innendurchmesser hat, der sich in eine oder mehrere der Rombinationsrillen des Stifts senken läßt, und ein zweiter Teil der Länge, der sich an dem Ende des röhrenförmigen Elements befindet, das bei Gebrauch das äußere Ende des röhrenförmigen Elements darstellt, einen so stark vergrößerten Innendurchmesser hat, daß er beim Einsenken des röhrenförmigen Elements in den Stift nicht in den Stift eingreift, wobei die Verbindungsstelle des ersten und zweiten Teils des röhrenförmigen Elements mit dem Innendurchmesser des ersten Teils des röhrenförmigen Elements mittels einer ringförmigen, im wesentlichen rechtwinklig zur Achse des röhrenförmigen Elements verlaufenden Ansatzfläche zusammenfällt, dadurch gekennzeichnet, daß die Gesamtheit der Mehrzahl der Kombinationssicherungs- und Bruchrillen (22) des Stifts über denselben Grunddurchmesser und damit über dieselbe Bruchfestigkeit verfügt und daß der zweite Teil (32) des röhrenförmigen Elements entlang des größeren Teils seiner dem Ansatz (34) benachbarten Länge eine konstante Wandstärke hat.

2. Befestigungselement nach Anspruch 1, dadurch gekennzeichnet, daß der Winkel zwischen der ringförmigen Ansatzfläche (34) und der Achse des Stiftes mehr als 75 Grad beträgt.

3. Befestigungselement nach einem der vorhergehenden Ansprüche, dadurch gekennzeichnet, daß der Innendurchmesser des zweiten Teils (32) im wesentlichen gleichförmig ist.

4. Befestigungselement nach einem der vorhergehenden Ansprüche, dadurch gekennzeichnet, daß der Innendurchmesser des zweiten Teils (32) dergestalt ist, daß die Wandstärke des zweiten Teils im wesentlichen die Hälfte der Wandstärke des ersten Teils (31) beträgt.

5. Befestigungselement nach einem der vorhergehenden Ansprüche, dadurch gekennzeichnet, daß die axiale Ausdehnung des zweiten Teils (32) im wesentlichen gleich der Hälfte der Wandstärke des ersten Teils (31) ist.

6. Befestigungselement nach einem der vorhergehenden Ansprüche, dadurch gekennzeichnet, daß die axiale Ausdehnung des zweiten Teils (32) des röhrenförmigen Elements (12, 80) sich über mindestens die Hälfte der Steigung der Kombinationssicherungs- und Bruchrillen (22) an dem Stift (10) erstreckt.

7. Befestigungselement nach einem der vorhergehenden Ansprüche, dadurch gekennzeichnet, daß die axiale Ausdehnung des zweiten Teils (32) des röhrenförmigen Elements (12, 80) nicht mehr als die Steigung der Kombinationsrillen (22) an dem Stift (10) beträgt.

## Revendications

1. Attache avec une aiguille et un élément tubulaire à refouler du type dans lequel l'aiguille porte une pluralité de gorges combinées de blocage et de rupture, chacune de ces gorges combinées peut servir de gorge de blocage ou de gorge à col de rupture, et l'élément tubulaire peut être refoulé dans une ou plusieurs des gorges combinées pour bloquer l'élément tubulaire sur l'aiguille; lequel élément tubulaire comporte une première portion de sa longueur avec un diamètre intérieur apte à un refoulement dans une ou plusieurs des gorges combinées sur l'aiguille, et une seconde portion de sa longueur, située à l'extrémité de l'élément tubulaire qui en service sera l'extrémité externe de l'élément tubulaire, laquelle seconde portion présente un diamètre intérieur accru qui est tel que lorsque l'élément tubulaire est refoulé sur l'aiguille, la seconde portion ne touchera pas l'aiguille, la jonction des première et seconde portions de l'élément tubulaire rencontrant le diamètre intérieur de la première portion de l'élément tubulaire au moyen d'une face d'épaulement annulaire qui est située substantiellement à angle droit par rapport à l'axe de l'élément tubulaire, caractérisée en ce que dans l'aiguille, la pluralité de gorges combinées de blocage et de rupture (22) ont toutes le même diamètre de fond et ont dès lors toutes la même résistance du col de rupture, et en ce que dans l'élément tubulaire la seconde portion (32) a une épaisseur de paroi constante sur la majeure partie de sa longueur au voisinage de l'épaulement (34).

2. Attache suivant la revendication 1, caractérisée en ce que l'angle entre la face d'épaulement annulaire (34) et l'axe de l'aiguille est plus grand que 75 degrés.

3. Attache suivant l'une ou l'autre des revendications précédentes, caractérisée en ce que le diamètre intérieur de la seconde portion (32) est substantiellement uniforme.

4. Attache suivant l'une ou l'autre des revendications précédentes, caractérisée en ce que le diamètre intérieur de la seconde portion (32) est tel que l'épaisseur de paroi de la seconde portion est substantiellement égale à la moitié de l'épaisseur de paroi de la première portion (31).

5. Attache suivant l'une ou l'autre des revendications précédentes, caractérisée en ce que l'extension axiale de la seconde portion (32) est substantiellement égale à la moitié de l'épaisseur de paroi de la première portion (31).

6. Attache suivant l'une ou l'autre des revendications précédentes, caractérisée en ce que l'extension axiale de la seconde portion (32) de l'élément tubulaire (12, 80) n'est pas inférieure à la moitié du pas des gorges combinées (22) sur l'aiguille (10).

7. Attache suivant l'une ou l'autre des revendications précédentes, dans laquelle l'extension axiale de la seconde portion (32) de l'élément tubulaire (12, 80) n'est pas supérieure au pas des gorges combinées (22) sur l'aiguille (10).

*Fig.1.*

*Fig.2.*

*Fig.3.*

Fig.4.

Fig.5.

Fig.6.